# EUROPÄISCHE PATENTSCHRIFT

(11) **EP 2 415 034 B1**
(45) Veröffentlichungstag und Bekanntmachung des Hinweises auf die Patenterteilung: **16.10.2013**
(21) Anmeldenummer: 10711651.9
(22) Anmeldetag: 18.03.2010
(51) Int. Cl.: G07F 19/00, G06F 9/46, G06F 21/00

(54) **SYSTEM UND VERFAHREN FÜR EINE AUTHENTISIERUNG VON KOMPONENTEN INNERHALB EINES SELBSTBEDIENUNGSAUTOMATEN**
SYSTEM AND METHOD FOR THE AUTHENTICATION OF COMPONENTS WITHIN A SELF-SERVICE MACHINE
SYSTÈME ET PROCÉDÉ D'AUTHENTIFICATION DE COMPOSANTS À L'INTÉRIEUR D'UN APPAREIL AUTOMATIQUE EN LIBRE SERVICE

(30) Priorität: 02.04.2009 DE 102009015628
(43) Veröffentlichungstag der Anmeldung: 08.02.2012
(73) Patentinhaber: Wincor Nixdorf International GmbH, 33106 Paderborn (DE)
(72) Erfinder: VON DER LIPPE, Carsten, 33098 Paderborn (DE); RIEDEL, Daniela, 33098 Paderborn (DE); NOLZEN, Klaus-Detlef, 63225 Langen (DE)
(74) Vertreter: Richly, Erik
(86) Internationale Anmeldenummer: PCT/EP2010/053509
(87) Internationale Veröffentlichungsnummer: WO 2010/112343

(56) Entgegenhaltungen:
- WO-A1-2008/061028
- GB-A- 2 388 235
- KR-A- 20070 084 931
- US-A- 5 297 283
- US-A1- 2005 251 589
- US-A1- 2008 005 586

## Beschreibung

Die Erfindung betrifft ein Verfahren und einen entsprechenden Selbstbedienungsautomat zur Authentisierung von Komponenten innerhalb des Automaten, unter Berücksichtigung von bestehenden Hardware- und Softwareschichten.

### Überblick über die Erfindung:

SB-Automaten (Selbstbedienungsautomaten), wie z.B. Geldautomaten (ATMs) sind heute oftmals aus Standardkomponeriten, wie PCs mit Windows oder Linux Betriebssystem aufgebaut. Auf der Betriebssystemschicht sind weitere Schichten angeordnet, die die Besonderheit des SB-Automaten berücksichtigen. So ist bei einem Geldautomat z.B. oberhalb des Betriebssystems eine CSW-Schicht (SB-Treiberschicht) angeordnet, die die Treiber für die Periphergeräte bereitstellt. Oberhalb dieser Schicht ist eine Abstraktionsschicht (ZENT/XFS) (SB-Abstraktionsschicht) angeordnet, die die unterschiedliche Hardware, die über Jahre verbaut wird, auf eine gemeinsame Funktionalität abbildet, die z.B. über ein Standard Programm Interface (API) angesprochen werden kann. Auf dieser letzten Schicht ist dann eine Applikationsschicht angeordnet, die Anwendungen auf dem SB-Gerät implementiert.
Ein Eingriff in diese Schichten ist zu vermeiden, da die Abhängigkeiten komplex sind und die Sicherheit beeinträchtigt werden kann. Ferner kann durch Veränderung dieser Schichten gegen gesetzliche Auflagen verstoßen werden.

Um ein hohes Maß an Sicherheit bei solchen SB-Automaten zu gewährleisten, dürfen nur bestimmte vom Hersteller zugelassene Komponenten verbaut werden. So ist es z.B. nicht erlaubt, fremde Tastaturen (EPPs Encrypting Pin Pad) von fremden Herstellern einzubauen. Es wird folglich ein Mechanismus benötigt, um sicherzustellen, dass ein Austausch der Tastatur (oder auch anderer Komponenten) erkannt wird und entsprechend darauf reagiert wird. Es ist zu beachten, dass die Geräte wie Tastatur, Geldausgabeeinheit, Bildschirm, Kartenleser durch serielle Schnittstellen, wie V24 oder USB usw., an den Hauptrechner angeschlossen werden.

Die US2008005586 Verschiedene Ausführungsformen zur Bereitstell ung einer Datenpfad Sicherheit in einem System-on-a-Chip (SOC)-Vorrichtung. Hierbei erfolgt eine Verschlüsselung der Daten auf dem Chip in Datenpfaden.
Die US5297283 offenbart ein Objekt-basiertes Betriebssystem für ein Multitasking-Computersystem, das Objekte bereitstellt, die die Architektur oder Zusammenhänge der Resourcen des Systems darstellen.
In diesem Zusammenhang ist ein Zugriff auf bestimmte Objekte erforderlich, um entsprechende Ressourcen in dem System zu verwenden. Hierbei werden entsprechende Kontrollmittel eingesetzt, um die Zugriffssteuerung zu erreichen wie z.B. ein Mutex

Die US2005/ 251589 offenbart ein Verfahren zur Steuerung des Zugriffs auf einen USB-Bus (universal serial bus).

Die GB2388235 offenbart einen SB-Automat mit einem sicheren Booten, wobei die Authentizität der Peripherie-Geräten überprüft wird.

### Überblick über die Erfindung

Aufgabe der vorliegenden Erfindung ist die Bereitstellung eines Verfahrens und einer Vorrichtung zur Erkennung des Austauschs von Peripheriegeräten bei SB-Automaten, und das Einleiten einer Reaktion, falls diese nicht zulässig sind.

Gelöst wird dieser Ansatz durch ein Verfahren und eine Vorrichtung nach den unabhängigen Ansprüchen.

In eine möglichen Ausführungsform wird ein Mechanismus implementiert, welcher die Funktion eines Systems eingeschränkt, wenn z.B. eine Fremd-EPP (Tastatur) eingebaut ist. Es wird daraufhingewiesen, dass die Erwähnung der Tastatur nicht beschränkend zu betrachten ist, sondern lediglich ein mögliches Beispiel für ein Peripheriegerät darstellt.

Hierzu wird in einem Prozess, der in einer der beschriebenen Ebenen (Vorzugsweise in der Abstraktionsschicht) oberhalb des Betriebsystems angeordnet ist, eine entsprechende Abfragemethodik eingebaut, welche feststellt, ob ein Fremd-EPP eingebaut ist. Wenn dies der Fall ist, also ein Fremd-EPP eingebaut ist, wird daraufhin ein globales Flag gesetzt. Bei diesem Flag handelt es sich vorzugsweise um einen globalen Mutex oder Semaphore, der durch das Betriebssystem zur Verfügung gestellt wird.

Eigentlich wird der Mutex zur Synchronisierung des Zugriffs auf kritische Betriebsmittel durch mehre Prozesse verwendet. Dies wird durch den wechselseitigen Ausschluss bzw. Mutex (Abk. für engl. mutual exclusion, auf deutsch wechselseitiger Ausschluss) erreicht. Dieser verhindert, dass nebenläufige Prozesse bzw. Threads gleichzeitig oder zeitlich verschränkt gemeinsam genutzte Datenstrukturen unkoordiniert verändern, wodurch die Datenstrukturen in einen inkonsistenten Zustand geraten können, auch wenn die Aktionen jedes einzelnen Prozesses/Threads für sich betrachtet konsistenzerhaltend sind.

Der Mutex wird dabei jeweils gesetzt (lesend/schreibend), wenn ein Prozess sich in dem kritischen Bereich befindet und auf ein Betriebsmittel zugreift.

In der vorliegenden Erfindung wird der Mutex jedoch selber abgefragt und nicht unbedingt das kritische Betriebsmittel, das durch ihn geschützt werden soll. Wenn der Prozess, der für das Prüfen der Peripheriegeräte zuständig ist, erkennt, dass sich das Peripheriegerät nicht korrekt authentifiziert, so wird der Mutex gesetzt. Das Zurücksetzen des Mutex ist nicht möglich, solange der Prozess, der den Mutex gesetzt hat, dies nicht selber durchführt. Somit kann auch nicht von einem anderen Prozess der Mutex wieder zurückgesetzt werden, um zu erreichen, dass eine gefälschte Tastatur eingebaut wird. Sollte der Prozess, der den Mutex hält, durch einen Fremdeingriff abgebrochen (man spricht auch von killen eines Prozesses) werden, so würde das Betriebsystem den Mutex in der Regel freigeben. In diesem Falle wäre theoretisch ein Anbringen einer gefälschten Tastatur und ein Zurücksetzen des Mutex möglich. Der SB-Automat überprüft jedoch ständig den Prozess, der für das Setzen des Mutex zuständig ist, und falls dieser abgebrochen würde, z.B. durch einen Fremdeingriff, so würde es zu einem Neustart des SB-Automaten kommen. Somit kommt das System in eine Boot-Endlosschleife, wenn der Prozess, der den Mutex setzt, immer wieder abgebrochen bzw. "gekillt" wird. Somit wird sichergestellt, dass ein Fremdzugriff nicht möglich ist, wodurch wiederum sichergestellt wird, dass ein Hardwareaustausch nicht erfolgt. Sollte bei einer gefälschten Tastatur nun ein weiterer Prozess versuchen, auf diesen Mutex zu zugreifen, so wird er feststellen, dass der Mutex gesetzt ist, und kann dann entsprechende Notfall-Operationen durchführen. Sollte es zum Beispiel zu einer Geldauszahlung durch eine Geldausgabeeinheit kommen, so kann der Treiber beziehungsweise die Softwareschicht, die diese Operation übernimmt den Mutex abfragen, und falls der Mutex gesetzt ist, so wird das Auszahlen abgebrochen und der Automat tritt in einen gesonderten Status ein und meldet diesen an die Verwaltungszentrale, an die der SB-Automat angeschlossen ist.

Beim Austausch der gefälschten Tastatur durch eine ordnungsgemäße Tastatur wird das System neu gestartet und der Mutex wird nicht gesetzt, so dass sich das SB-System in einen ordnungsgemäßen Zustand befindet.

Durch die Verwendung eines globalen Mutex, der in der Betriebssystemschicht angeordnet ist, ist es möglich, dass lediglich geringe Änderungen vorzunehmen sind, um in allen Schichten festzustellen, ob ein nicht erlaubtes Peripheriegerät vorliegt. In der bevorzugten Ausführungsform sollte ein Prozess gewählt werden, der den Mutex hält, der auf einer Vielzahl von Plattformen für SB-Automaten implementiert ist, damit lediglich geringe Änderungen für jede Plattform notwendig sind, beziehungsweise die Änderung mit Bezug zu einer Plattform auch auf andere Plattformen übertragen werden können. Das Verhalten auf den gesetzten Mutex kann von Anwendungsfall zu Anwendungsfall unterschiedlich sein. Aufgrund des globalen Mutex ist es jedoch möglich, dass jede Schicht, wie sie oben beschrieben wurde, Zugriff auf den Mutex besitzt und entsprechend reagieren kann. In einem Windows System kann z.B. der Mutex über die Registry oder Pfade erreichbar sein. Es können auch entsprechenden Namen definiert werden, die für bestimmte Peripheriegeräte stehen.

Folglich ist die Schnittstelle zwischen Sensoren und Aktoren ein Mutex Objekt. Bei gesetztem Objekt wurde ein Fremd-EPP erkannt.

Der Name des Objektes ist "Global\xxxEppyyy" (z.B. unter Windows 2000 oder XP. Unter Windows NT 4.0 entfällt der "Global\" Präfix, da er dort nicht unterstützt wird.

Vor jeder Auszahlung prüft die Software, ob dieses Flag / Mutex existiert und belegt ist. Nur, wenn das Flag nicht existiert oder existiert und nicht belegt ist, wird die Auszahlung durchgeführt. Die abfragende Software muss bei einem sonstigen Fehler beim Open/Create des Mutex-Objektes auch die Auszahlung (bzw. alle Transportaufträge, die Geld zur Auszahlung bringen können) verhindern, da es sein kann, dass einem Prozess der Zugriff auf das Objekt verwehrt wird.

Wenn die entsprechenden Transportaufträge verhindert werden, wird ein neuer Fehlercode zurückgegeben.

Implementiert wird der oben genannte Mechanismus mit der Abfrage des Mutex-Objektes in einigen wenigen DLLs (Dynamic loadable library).

Die eigentliche Überprüfung der Authentizität der Peripheriegeräte ist nicht Bestandteil dieser Erfindung. In der Regel erfolgt dies durch Überprüfung von Signaturen, die von den Peripheriegeräten herunter geladen werden. In diesem Bereich gibt es bereits eine Vielzahl von Erfindungen und Anwendungen. Die vorliegende Erfindung zielt vornehmlich darauf ab, das Verhalten des SB-Systems zu steuern, wenn vorzugsweise beim Hochfahren beziehungsweise Booten des SB Systems festgestellt wird, dass ein Peripheriegerät, wie die Tastatur, ausgetauscht wurde.

### Figurenbeschreibung

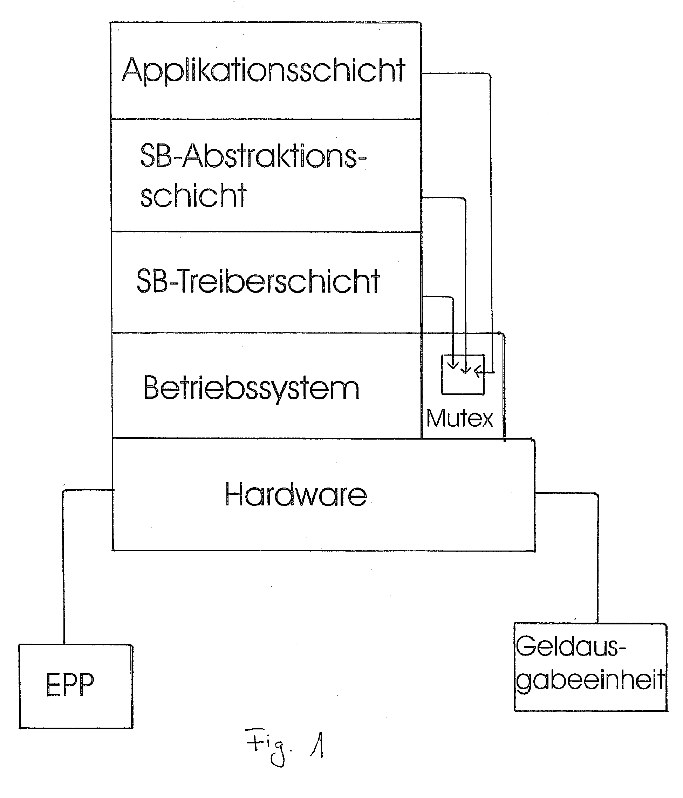

Die einzige Figur zeigt den Schichtenaufbau eines SB-Automaten mit Peripheriegeräten

### Detaillierte Beschreibung der Figur

Die einzige Figur zeigt den Schichtaufbau der vorliegenden Erfindung, die einen SB Automaten darstellt. Als Basis des SB Automaten dient ein Computer/PC, der über Schnittstellen mit Peripheriegeräten verbunden ist. Diese Schnittstellen sind oftmals USB oder V. 24 Schnittstellen, die mit dem PC verbunden sind. Auf dem Rechner/PC läuft ein Betriebssystem, das in der bevorzugten Ausführungsform ein Windows oder ein Unix/Linux Betriebssystem ist. Dieses Betriebssystem stellt in einem Speicherbereich einen globalen Mutex zur Verfügung. Oberhalb des Betriebssystems ist eine SB-Treiberschicht angeordnet, die den Zugriff auf die Geldausgabeeinheit und die Tastatur EPP ermöglicht. Es werden aus Sicherheitsgründen in der Regel nicht die Treiber des Betriebssystems verwendet, sondern gesonderte sichere Treiber des SB-Automaten Herstellers. Oberhalb der Treiberschicht ist eine SB Automatenabstraktionsschicht angeordnet, die die Treiberschicht abstrahiert, so dass auch die Applikationen, die in der Applikationsschicht angeordnet sind, bei sich verändernder Hardware nicht angepasst werden müssen. Die Abstraktionsschicht stellt somit eine Vermittlerschicht zwischen Applikationsschicht und Treiberschicht dar. In ihr laufen Prozesse oder es werden dort APIs, oder DLL bereitgestellt, die der Applikation zur Verfügung gestellt werden. Wie den Pfeilen in der Figur zu entnehmen ist, haben alle Schichten Zugriff auf den Mutex, der in der Betriebsystemschicht angeordnet ist. Hierdurch bedarf es keiner großen Änderungen innerhalb der einzelnen Schichten, sondern es werden lediglich einige Änderungen in der Abstraktionsschicht oder der Treiberschicht notwendig, um das gewünschte Ergebnis zu erreichen.

## Patentansprüche

1. Verfahren zum Überprüfen der Authentizität von Peripheriegeräten eines Selbstbedienungsautomaten (SB-Automaten), der ein Betriebssystem aufweist, das mindestens einen globalen Mutex bereitstellt, mit Softwareschichten, die auf dem Betriebssystem angeordnet sind, mit Prozessen, die auf dem SB-Autamat ablaufen und die auf das Betriebssystem und/oder die Softwareschichten zugreifen, umfassend die Schritte:
- Überprüfen der Authentizität eines angeschlossenen Peripheriegerätes durch einen ersten Prozess;
- Falls bei der Überprüfung festgestellt wurde, dass das Peripheriegeräte nicht authentifiziert werden konnte, setzen des Mutex durch den ersten Prozess, wobei das Zurücksetzen des Mutex nicht möglich ist, solange der erste Prozess, der den Mutex gesetzt hat, dies nicht selber durchführt;
- Überprüfen des Mutex durch einen zweiten Prozess aufgrund eines Ereignisses, und falls der Mutex gesetzt ist, schalten des SB-Automaten in einen Fehlerzustand.

2. Das Verfahren nach dem vorhergehenden Anspruch, wobei der SB-Automat ein Geldautomat ist, der mit einer Tastatur versehen ist, die durch den ersten Prozess auf Authentizität geprüft wird.

3. Das Verfahren nach einem oder mehreren der vorhergehenden Ansprüche, **dadurch gekennzeichnet, dass** der zweite Prozess eine Geldausgabeeinheit ansteuert, wobei eine Geldausgabe nicht erfolgt, wenn der Mutex gesetzt ist.

4. Das Verfahren nach einem oder mehreren der vorhergehenden Ansprüche, wobei der Mutex bei einem Windows-Betriebssystem über den Pfad oder die Registry bestimmt wird.

5. Das Verfahren nach einem oder mehreren der vorhergehenden Ansprüche, wobei der erste Prozess beim Systemstart das Peripheriegerät überprüft.

6. Das Verfahren nach einem oder mehreren der vorhergehenden Ansprüche, wobei durch einen dritten Prozess eine Überwachung des ersten Prozesses erfolgt, um sicherzustellen, dass dieser nicht beendet wird, und falls er beendet wird, so erfolgt ein Herunterfahren des SB-Automaten.

7. Selbstbedienungsautomat (SB-Automat) mit Mitteln zum Überprüfen der Authentizität von Peripheriegeräten eines SB-Automaten, der ein Betriebssystem aufweist, das mindestens einen globalen Mutex bereitstellt, mit Softwareschichten, die auf dem Betriebsystem angeordnet sind, mit Prozessen, die auf dem SB-Automat ablaufen und die auf das Betriebssystem und/oder die Softwareschichten zugreifen, wobei der SB-Automat umfasst:
- eine ersten Prozess, der ein Überprüfen der Authentizität eines angeschlossenen Peripheriegerätes durchführt, und falls bei der Überprüfung festgestellt wurde, dass das Peripheriegerät nicht authentifiziert werden konnte, einen Mutex setzt wobei das 'Zurücksetzen des Mutex nicht' möglich ist, solange der erste Prozess, der den Mutex gesetzt hat, dies nicht selber durchführt;
- einen zweiten Prozess, der aufgrund eines Ereignisses den Mutex überprüft, und falls der Mutex gesetzt ist, den SB-Automaten in einen Fehlerzustand schaltet.

8. Der SB-Automat nach dem vorhergehenden Anspruch, wobei der SB-Automat ein Geldautomat ist, der mit einer Tastatur versehen ist, die durch den ersten Prozess auf Authentizität geprüft wird.

9. Der SB-Automat nach einem oder mehreren der vorhergehenden SB-Automaten-Ansprüche, **dadurch gekennzeichnet, dass** der zweite Prozess eine Geldausgabeeinheit ansteuert, wobei eine Geldausgabe nicht erfolgt, wenn der Mutex gesetzt ist.

10. Der SB-Automat nach einem oder mehreren der vorhergehenden SB-Automaten-Ansprüche, wobei der Mutex bei einem Windows-Betriebssystem über den Pfad oder die Registry bestimmt wird.

11. Der SB-Automat nach einem oder mehreren der vorhergehenden SB-Automaten-Ansprüche, wobei der erste Prozess beim Systemstart das Peripheriegerät überprüft.

12. Der SB-Automat nach einem oder mehreren der vorhergehenden SB-Automaten-Ansprüche, umfassend einen dritten Prozess, der eine Überwachung des ersten Prozesses durchführt, um sicherzustellen, dass dieser nicht beendet wird, und falls er beendet wird, so erfolgt ein Herunterfahren des SB-Automaten.

## Claims

1. Method for checking the authenticity of peripheral devices in a self-service machine (SS machine) that has an operating system that provides at least one global mutex, having software layers that are arranged on the operating system, having processes that run on the SS machine and that access the operating system and/or the software layers, comprising the following steps:
- the authenticity of a connected peripheral device is checked by a first process;
- if the check has established that the peripheral device could not be authenticated, the mutex is set by the first process, the mutex not being able to be reset while the first process, which has set the mutex, does not perform this itself;
- the mutex is checked by a second process on the basis of an event, and if the mutex is set then the SS machine is switched to an error state.

2. Method according to the preceding claim, wherein the SS machine is an automated teller machine that is provided with a keypad that is checked for authenticity by the first process.

3. Method according to either or both of the preceding claims, **characterized in that** the second process actuates a cash dispensing unit, with cash not being dispensed if the mutex is set.

4. Method according to one or more of the preceding claims, wherein the mutex is determined via the path or the registry in a Windows operating system.

5. Method according to one or more of the preceding claims, wherein the first process checks the peripheral device when the system starts.

6. Method according to one or more of the preceding claims, wherein a third process monitors the first process in order to ensure that the latter is not terminated, and if it is terminated then the SS machine is shut down.

7. Self-service machine (SS machine) having means for checking the authenticity of peripheral devices in an SS machine that has an operating system that provides at least one global mutex, having software layers that are arranged on the operating system, having processes that run on the SS machine and that access the operating system and/or the software layers, wherein the SS machine comprises:
- a first process that checks the authenticity of a connected peripheral device and, if the check has established that the peripheral device could not be authenticated, sets a mutex, the mutex not being able to be reset while the first process, which has set the mutex, does not perform this itself;
- a second process that checks the mutex on the basis of an event and, if the mutex is set, switches the SS machine to an error state.

8. SS machine according to the preceding claim, wherein the SS machine is an automated teller machine that is provided with a keypad that is checked for authenticity by the first process.

9. SS machine according to either or both of the preceding SS machine claims, **characterized in that** the second process actuates a cash dispensing unit, with cash not being dispensed if the mutex is set.

10. SS machine according to one or more of the preceding SS machine claims, wherein the mutex is determined via the path or the registry in a Windows operating system.

11. SS machine according to one or more of the preceding SS machine claims, wherein the first process checks the peripheral device when the system starts.

12. SS machine according to one or more of the preceding SS machine claims, comprising a third process that monitors the first process in order to ensure that it is not terminated, and if it is terminated then the SS machine is shut down.

## Revendications

1. Procédé de contrôle de l'authenticité de dispositifs périphériques d'un distributeur en libre service (distributeur automatique) qui comprend un système d'exploitation fournissant au moins un mutex global, comportant des couches logicielles superposées au système d'exploitation, comportant des processus qui s'exécutent sur le distributeur automatique et qui accèdent au système d'exploitation et/ou aux couches logicielles, comprenant les étapes suivantes :
- le contrôle de l'authenticité d'un dispositif périphérique connecté au moyen d'un premier processus ;
- si le contrôle a permis de constater que le dispositif périphérique n'a pas pu être authentifié, l'armement du mutex au moyen du premier processus, le réarmement du mutex n'étant pas possible tant que le premier processus ayant armé le mutex n'effectue pas cela lui-même ;
- le contrôle du mutex par un deuxième processus en raison d'un événement et, si le mutex est armé, la mise du distributeur automatique dans un état d'erreur.

2. Procédé selon l'une quelconque des revendications précédentes, dans lequel le distributeur automatique est un distributeur automatique de billets qui est muni d'un clavier dont l'authenticité est contrôlée par le premier processus.

3. Procédé selon l'une ou plusieurs des revendications précédentes, **caractérisé en ce que** le deuxième processus commande une unité de distribution automatique de billets, une distribution de billets ne se produisant pas lorsque le mutex est armé.

4. Procédé selon l'une ou plusieurs des revendications précédentes, dans lequel le mutex est déterminé, dans le cas d'un système d'exploitation Windows, par l'intermédiaire du chemin d'accès ou du registre.

5. Procédé selon l'une ou plusieurs des revendications précédentes, dans lequel le premier processus contrôle le dispositif périphérique lors du démarrage du système.

6. Procédé selon l'une ou plusieurs des revendications précédentes, dans lequel un contrôle du premier processus s'effectue au moyen d'un troisième processus afin de vérifier que celui-ci ne s'est pas terminé, une mise à l'arrêt du distributeur automatique étant effectuée si celui-ci s'est terminé.

7. Distributeur en libre service (distributeur automatique) comprenant des moyens pour contrôler l'authenticité de dispositifs périphériques d'un distributeur automatique, comprenant un système d'exploitation qui fournit au moins un mutex global, comportant des couches logicielles superposées au système d'exploitation, comportant des processus qui s'exécutent sur le distributeur automatique et qui accèdent au système d'exploitation et/ou aux couches logicielles, le distributeur automatique comprenant :
- un premier processus qui effectue un contrôle de l'authenticité d'un dispositif périphérique connecté et, s'il a été établi lors du contrôle que le dispositif n'a pas pu être identifié, arme un mutex, le réarmement du mutex n'étant pas possible tant que le premier processus ayant armé le mutex n'effectue pas cela lui-même ;
- un deuxième processus qui contrôle le mutex en raison d'un événement et, si le mutex est armé, fait passer le distributeur automatique dans un état d'erreur.

8. Distributeur automatique selon la revendication précédente, dans lequel le distributeur automatique est un distributeur automatique de billets qui est muni d'un clavier dont l'authenticité est contrôlée par le premier processus.

9. Distributeur automatique selon l'une ou plusieurs des revendications précédentes concernant le distributeur automatique, **caractérisé en ce que** le deuxième processus commande une unité de distribution de billets, une distribution de billets ne se produisant pas lorsque le mutex est armé.

10. Distributeur automatique selon l'une ou plusieurs des revendications précédentes concernant le distributeur automatique, dans lequel le mutex est déterminé, dans le cas d'un système d'exploitation Windows, par l'intermédiaire du chemin d'accès ou du registre.

11. Distributeur automatique selon l'une ou plusieurs des revendications précédentes concernant le distributeur automatique, dans lequel le premier processus contrôle le dispositif périphérique lors du démarrage du système.

12. Distributeur automatique selon l'une ou plusieurs des revendications précédentes concernant le distributeur automatique, comprenant un troisième processus qui effectue un contrôle du premier processus afin de vérifier que celui-ci ne s'est pas terminé, une mise à l'arrêt du distributeur automatique étant effectuée si celui-ci s'est terminé.
